# EUROPÄISCHE PATENTANMELDUNG

(11) **EP 2 829 314 A1**
(43) Veröffentlichungstag der Anmeldung: **28.01.2015**
(21) Anmeldenummer: 13177458.0
(22) Anmeldetag: 22.07.2013
(51) Int. Cl.: B01D 53/50, B01D 53/77, B01D 53/79, F23J 15/02, F23J 15/04

(54) **Waschsuspensionsverteilereinrichtung**

(71) Anmelder: Siemens Aktiengesellschaft, 80333 München (DE)
(72) Erfinder: Binkowski, Stefan, 51643 Gummersbach (DE); Schadow, Uwe, 51643 Gummersbach (DE)

(57) **Zusammenfassung**

Die Erfindung betrifft ein Waschsuspensionsverteilereinrichtung (1) zur Anordnung innerhalb eines Waschturms, umfassend ein einen Zulauf (2) definierendes und eine Längsachse (3) aufweisendes Hauptrohr (4) und mehrere mit dem Hauptrohr (4) in Fluidverbindung stehende Nebenrohre (5-14), die in einer gemeinsamen Ebene angeordnet sind und beidseitig von dem Hauptrohr (4) quer zu dessen Längsachse (3) vorstehen, wobei zumindest die Nebenrohre (5-14) jeweils mit einer Vielzahl von Austrittsdüsen (17) versehen sind, und wobei Endbereiche der Nebenrohre (5-14) auf einer gemeinsamen Kreisbahn (15) angeordnet sind, dadurch gekennzeichnet, dass das Hauptrohr (4) derart angeordnet ist, dass seine Längsachse (3) nicht mit einer sich durch den Kreisbahnmittelpunkt (16) erstreckenden Spiegelachse (19) der Kreisbahn (15) übereinstimmt.

## Beschreibung

Die vorliegende Erfindung betrifft eine Waschsuspensionsverteilereinrichtung zur Anordnung innerhalb eines Waschturms, umfassend zumindest ein einen Zulauf definierendes und eine Längsachse aufweisendes Hauptrohr und mehrere mit dem Hauptrohr in Fluidverbindung stehende Nebenrohre, die in einer gemeinsamen Ebene angeordnet sind und beidseitig von dem Hauptrohr quer zu dessen Längsachse vorstehen, wobei zumindest die Nebenrohre jeweils mit einer Vielzahl von Austrittsdüsen versehen sind, und wobei Endbereiche der Nebenrohre auf einer gemeinsamen Kreisbahn angeordnet sind. Ferner betrifft die vorliegende Erfindung einen Waschturm, der mehrere solcher Waschsuspensionsverteilereinrichtungen aufweist, die übereinander angeordnet sind.

Bei der Nutzung fossiler Brennstoffe, wie beispielsweise in Kohlekraftwerken, Müllverbrennungsanlagen oder dergleichen, entstehen Rauchgase mit unerwünschten, häufig auch giftigen Bestandteilen, deren unmittelbare Emission in die Umgebung nicht wünschenswert und/oder aus gesetzlichen Gründen unzulässig ist. Aus diesem Grund werden Rauchgase in sogenannten Waschtürmen einer Reinigung unterzogen, um sie von Schadstoffen wie Schwefeloxiden, giftigen Staub oder dergleichen zu befreien. Das Rauchgas wird durch eine im unteren Bereich des Waschturms vorgesehene Eintrittsöffnung in den Waschturm eingeleitet, durchströmt diesen dann aufwärts entgegen der Gravitationskraft und verlässt ihn durch eine im oberen Bereich des Waschturms vorgesehene Austrittsöffnung. Zwischen der Eintrittsöffnung und der Austrittsöffnung des Waschturms befindet sich ein sogenannter Reaktionsbereich, in dem das Rauchgas mit einer eingedüsten und abwärts strömenden Waschsuspension in Reaktion gebracht wird, welche die in dem Rauchgas enthaltenen Schadstoffe löst bzw. neutralisiert.

Zur Eindüsung der Waschsuspension werden Waschsuspensionsverteilereinrichtungen der eingangs genannten Art eingesetzt. Diese dienen dazu, eine über das Hauptrohr zugeführte Waschsuspension über die Nebenrohre auf die einzelnen Austrittsdüsen zu verteilen, wobei eine möglichst gleichmäßige Austrittsdüsenverteilung über den Querschnitt des Waschturms angestrebt wird. Da eine einzelne Waschsuspensionsverteilereinrichtung hierzu meist nicht ausreicht, werden oftmals mehrere Waschsuspensionsverteilereinrichtungen eingesetzt, die derart ausgebildet und übereinander angeordnet werden, dass die Austrittsdüsen der einzelnen Waschsuspensionsverteilereinrichtungen versetzt zueinander angeordnet sind, um auf diese Weise eine möglichst homogene Verteilung zu erzielen. Aus fertigungstechnischen Gründen ist es dabei wünschenswert, dass die einzelnen Waschsuspensionsverteilereinrichtungen einen einheitlichen Aufbau aufweisen.

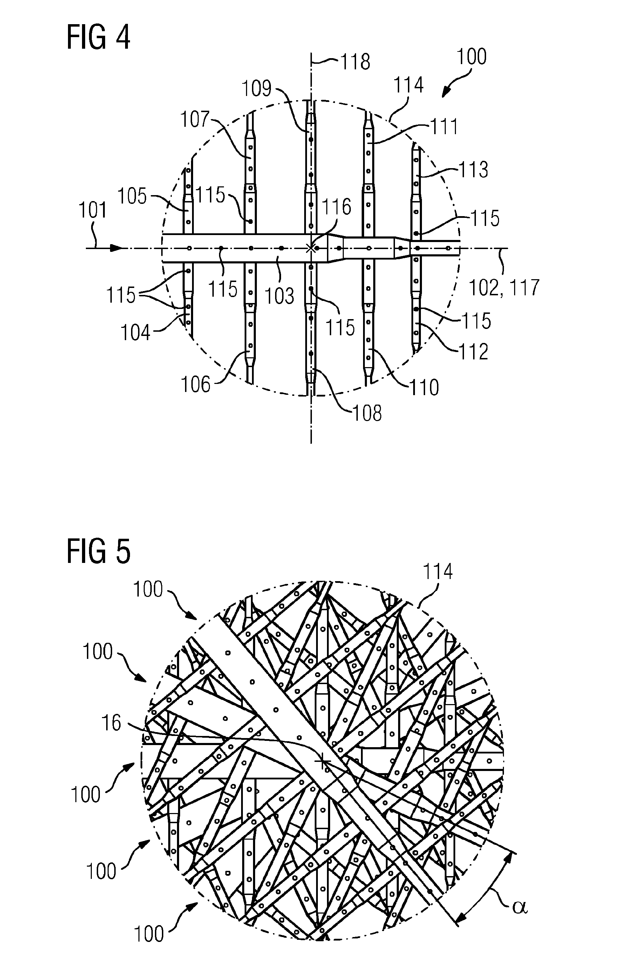

Figur 4 zeigt beispielhaft eine bekannte Waschsuspensionsverteilereinrichtung 100, die ein einen Zulauf 101 definierendes und eine Längsachse 102 aufweisendes Hauptrohr 103 und zehn mit dem Hauptrohr 103 in Fluidverbindung stehende Nebenrohre 104-113 aufweist, die in einer gemeinsamen Ebene angeordnet sind und beidseitig von dem Hauptrohr 103 senkrecht zu dessen Längsachse 102 vorstehen, wobei die jeweiligen Endbereiche der Nebenrohre 104 bis 113 auf einer gemeinsamen Kreisbahn 114 angeordnet sind. Entsprechend kann die Wachsuspensionsverteileinrichtung 100 im Inneren eines nicht näher dargestellten Waschturms mit rundem Querschnitt angeordnet werden. Das Hauptrohr 103 sowie die Nebenrohre 104-113 sind jeweils mit einer Vielzahl von Austrittsdüsen 115 versehen, durch welche eine über den Zulauf 101 zugeführte Waschsuspension im bestimmungsgemäßen Zustand der Waschsuspensionsverteilereinrichtung 100 in den Waschturm eingedüst werden kann. Die Längsachse 102 des Hauptrohrs 103 ist bei der Waschsuspensionsverteilereinrichtung 100 deckungsgleich mit einer sich durch den Kreisbahnmittelpunkt 116 erstreckenden Spiegelachse 117 der Kreisbahn 114 angeordnet. Die Innenrohre 104 stehen jeweils paarweise beidseitig von dem Hauptrohr 103 derart vor, dass die Nebenrohre eines Nebenrohrpaars miteinander fluchtend angeordnet sind und die gleiche Länge aufweisen. Die Nebenrohre 108 und 109 des mittleren Nebenrohrpaars erstrecken sich durch den Kreisbahnmittelpunkt 116. Die Nebenrohre 106, 107, 110, 111 der benachbarten Nebenrohrpaare weisen jeweils einen einander entsprechenden Abstand a₁ zum Kreisbahnmittelpunkt 116 auf. Analoges gilt auch für die Abstände a₂ der Nebenrohre 104, 105, 112, 113 der ganz außen angeordneten Nebenrohrpaare zum Kreisbahnmittelpunkt 116. Insgesamt weist die Waschsuspensionsverteilereinrichtung 100 damit einen Aufbau auf, der sowohl in Bezug auf die zuvor genannte Spiegelachse 117 als auch in Bezug auf eine zu der Spiegelachse 117 senkrecht angeordneten und sich durch den Kreisbahnmittelpunkt 116 erstreckenden Spiegelachse 118 im Wesentlichen symmetrisch ist.

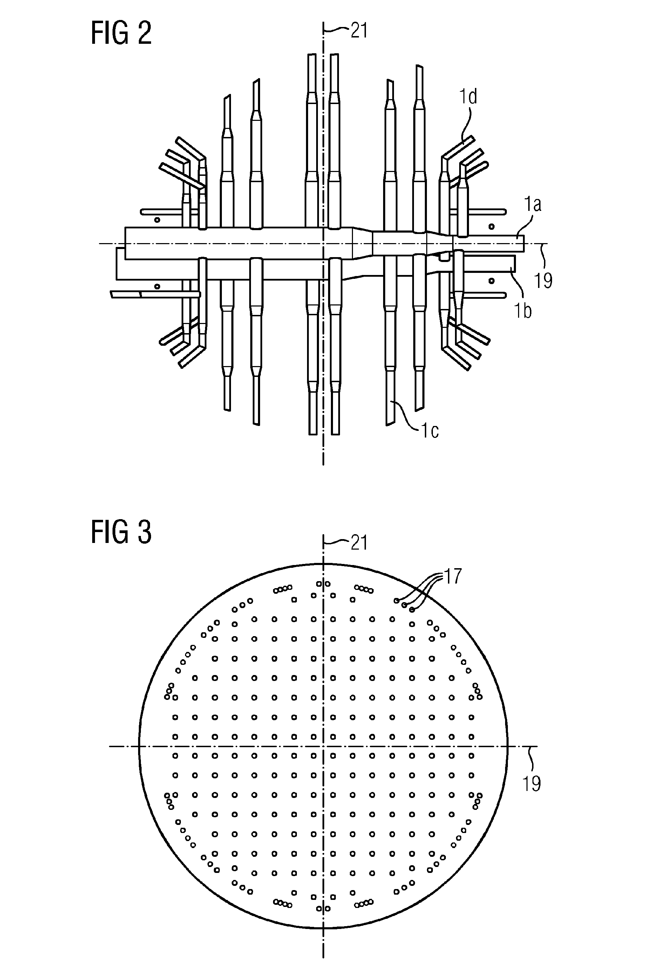

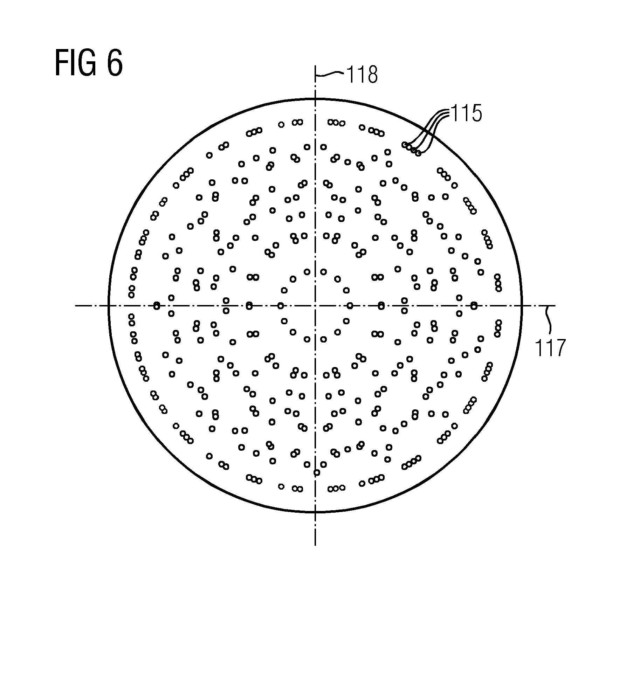

Figur 5 zeigt schematisch eine Draufsicht einer aus fünf der in Figur 3 dargestellten Waschsuspensionsverteilereinrichtungen 100 bestehenden Anordnung, die innerhalb eines nicht näher dargestellten Waschturms übereinander und relativ zueinander jeweils um den Kreisbahnmittelpunkt 116 um einen vorbestimmten Winkel α gedreht angeordnet sind. Hierdurch ergibt sich die in Figur 6 dargestellte Austrittsdüsenverteilung, bei der die Austrittsdüsen 115 der Waschsuspensionsverteilereinrichtungen 100 auf konzentrisch zum Kreisbahnmittelpunkt 116 angeordneten Ringen positioniert sind.

Ein Problem dieser in Figur 6 dargestellten Austrittsdüsenverteilung besteht darin, dass sie bezogen auf die durch die Kreisbahn 14 definierte Kreisfläche relativ ungleichmäßig ist. So werden einige Bereiche der Kreisfläche besser durch die Austrittdüsen 115 abgedeckt als andere Bereiche, was sich negativ auf eine gleichmäßige Behandlung des den Waschturm durchströmenden Rauchgases auswirkt.

Ausgehend von diesem Stand der Technik ist es eine Aufgabe der vorliegenden Erfindung, eine Waschsuspensionsverteilereinrichtung sowie einen Waschturm der eingangs genannten Art zu schaffen, bei denen mit einfachen und preiswerten Mitteln eine gleichmäßige Rauchgasbehandlung über den Querschnitt eines Waschturms gewährleistet werden kann.

Zur Lösung dieser Aufgabe schafft die vorliegende Erfindung eine Waschsuspensionsverteilereinrichtung der eingangs genannten Art, die dadurch gekennzeichnet ist, dass das Hauptrohr derart angeordnet ist, dass seine Längsachse nicht mit einer sich durch den Kreisbahnmittelpunkt erstreckenden Spiegelachse der Kreisbahn übereinstimmt. Dank einer solch versetzten Anordnung des Hauptrohrs zur Spiegelachse der Kreisbahn stimmen die Positionen der Austrittsdüsen zweier baugleich ausgeführter und übereinander angeordneter Waschsuspensionsverteilereinrichtungen nicht miteinander überein, wenn diese um die besagte Spiegelachse der Kreisbahn um 180° relativ zueinander gedreht werden, so dass eine sehr gute und gleichmäßige Verteilung der Austrittdüsen über die durch die Kreisbahn definierte Kreisfläche erzielt werden kann.

Gemäß einer Ausgestaltung der vorliegenden Erfindung erstreckt sich die Längsachse des Hauptrohrs parallel zu einer Spiegelachse der Kreisbahn. Auf diese Weise wird eine rasterartige Verteilung der Austrittsdüsen erzielt, wenn zwei baugleich ausgeführte und übereinander angeordnete Waschsuspensionsverteilereinrichtungen um die Spiegelachse der Kreisbahn um 180° relativ zueinander gedreht werden.

Bevorzugt zweigen die Nebenrohre jeweils senkrecht vom Hauptrohr ab, wodurch sich eine rasterartige Verteilung der Austrittsdüsen mit senkrecht zueinander angeordneten Rasterlinien ergibt.

Die Nebenrohre stehen vorteilhaft derart paarweise beidseitig von dem Hauptrohr vor, dass die Nebenrohre eines Nebenrohrpaars zumindest teilweise miteinander fluchtend angeordnet sind. Auch dieser Aufbau trägt zu einer regelmäßigen rasterartigen Verteilung der Austrittsdüsen bei.

Gemäß einer Ausführungsform der vorliegenden Erfindung sind die jeweils kürzesten Abstände der Nebenrohre oder der Nebenrohrpaare zum Mittelpunkt der Kreisbahn verschieden. Dank dieser Ausgestaltung stimmen die Positionen der Austrittsdüsen zweier baugleich ausgeführter und übereinander angeordneter Waschsuspensionsverteilereinrichtungen auch dann nicht überein, wenn diese um eine sich senkrecht zur Längsachse des Hauptrohrs erstreckende Spiegelachse der Kreisbahn zueinander gedreht werden. Entsprechend kann eine noch feinere Rasteraufteilung der Austrittsdüsen über die durch die Kreisbahn definierte Kreisfläche erzielt werden.

Bevorzugt sind die Austrittsdüsen zumindest teilweise an quer von den Nebenrohren vorstehenden Düsenzuteilungsleitungen angeordnet. Damit kann die Positionierung der Austrittdüsen eines einzelnen Nebenrohrs wesentlich variabler gestaltet werden.

Vorteilhaft sind die Austrittsdüsen zumindest zum Großteil entlang sich parallel und/oder senkrecht zueinander erstreckenden Geraden angeordnet, was ebenfalls der Erzielung einer gleichmäßigen rasterartigen Verteilung der Austrittsdüsen zuträglich ist.

Ferner schafft die vorliegende Erfindung zur Lösung der eingangs genannten Aufgabe einen Waschturm mit mehreren übereinander angeordneten und baugleich ausgeführten Waschsuspensionsverteilereinrichtungen der erfindungsgemäßen Art, wobei zumindest eine erste Waschsuspensionsverteilereinrichtung gegenüber einer zweiten Waschsuspensionsverteilereinrichtung um eine erste Spiegelachse der ihr zugeordneten Kreisbahn um 180° gedreht ist.

Gemäß einer Ausgestaltung der vorliegenden Erfindung ist zumindest eine dritte Waschsuspensionsverteilereinrichtung gegenüber der ersten Waschsuspensionsverteilereinrichtung um eine zweite Spiegelachse der ihr zugeordneten Kreisbahn um 180° gedreht, wobei sich die zweite Spiegelachse senkrecht zu der genannten ersten Spiegelachse der ersten Waschsuspensionsverteilereinrichtung erstreckt.

Weitere Merkmale und Vorteile der vorliegenden Erfindung werden anhand der nachfolgenden Beschreibung einer Ausführungsform einer erfindungsgemäßen Waschsuspensionsverteilereinrichtung unter Bezugnahme auf die Zeichnung deutlich. Darin ist
Figur 1 eine schematische Draufsicht einer Waschsuspensionsverteilereinrichtung gemäß einer Ausführungsform der vorliegenden Erfindung;
Figur 2 eine schematische Ansicht, die vier der in Figur 1 dargestellten Waschsuspensionsverteilereinrichtungen zeigt, die in erfindungsgemäßer Weise übereinander angeordnet sind;
Figur 3 eine schematische Ansicht, die eine Austrittsdüsenverteilung zeigt, die sich bei der in Figur 2 dargestellten Anordnung ergibt;
Figur 4 eine schematische Ansicht, die eine bekannte Waschsuspensionsverteilereinrichtung gemäß dem Stand der Technik zeigt;
Figur 5 eine schematische Ansicht, die fünf der in Figur 4 dargestellten Waschsuspensionsverteilereinrichtungen zeigt, die übereinander angeordnet und relativ zueinander um einen vorbestimmten Winkel um einen Kreisbahnmittelpunkt gedreht sind; und
Figur 6 eine schematische Ansicht einer Austrittsdüsenverteilung, die sich bei der in Figur 5 dargestellten Anordnung ergibt.

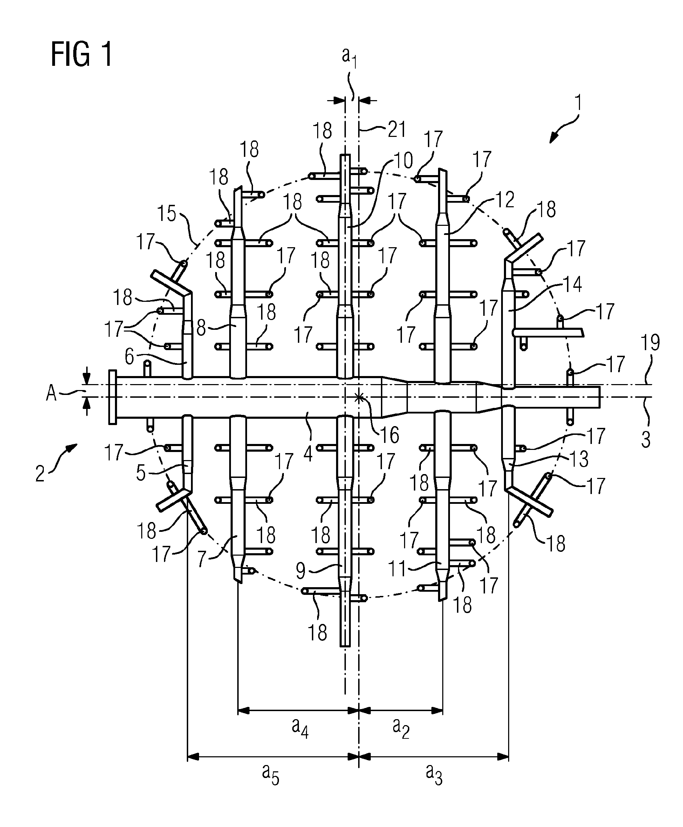

Figur 1 zeigt eine Waschsuspensionsverteilereinrichtung 1 gemäß einer Ausführungsform der vorliegenden Erfindung. Die Waschsuspensionsverteilereinrichtung 1 umfasst ein einen Zulauf 2 definierendes und eine Längsachse 3 aufweisendes Hauptrohr 4 und mehrere mit dem Hauptrohr 4 in Fluidverbindung stehende Nebenrohre 5-14, die in einer gemeinsamen Ebene angeordnet sind und beidseitig von dem Hauptrohr 4 rechtwinklig zu dessen Längsachse 3 vorstehen. Dabei bilden jeweils zwei einander gegenüberliegende Nebenrohre ein Nebenrohrpaar, wobei die Nebenrohre eines Nebenrohrpaars zumindest im jeweiligen Anbindungsbereich an das Hauptrohr 4 miteinander fluchtend angeordnet sind. An den Nebenrohren 5-14 ebenso wie am Hauptrohr 4 sind Austrittsdüsen 17 vorgesehen. Genauer gesagt sind die Austrittsdüsen 17 an Düsenzuteilungsleitungen 18 positioniert, die auswärts von dem Hauptrohr 4 und den Nebenrohren 4-14 abstehen. Gemäß der in Figur 1 dargestellten Ausführungsform wird auf diese Weise insgesamt eine im Wesentlichen rasterartige Verteilung der Austrittsdüsen 17 mit zueinander senkrecht angeordneten Rasterlinien erzielt. Die Austrittsdüsen 17 sind jeweils paarweise vorgesehen, wobei in Figur 1 jeweils nur die obere Austrittsdüse 17 eines Austrittsdüsenpaars zu sehen ist. Die Austrittsdüsen 17 jedes Austrittsdüsenpaars sind entgegengesetzt ausgerichtet, so dass im bestimmungsgemäßen Zustand eine Waschsuspension in beiden Richtungen quer zur Zeichenebene gemäß Figur 1 abgegeben werden kann.

Erfindungsgemäß stimmt die Position der Längsachse 3 des Hauptrohrs 4 nicht mit einer sich durch den Kreisbahnmittelpunkt 16 erstreckenden Spiegelachse 19 der Kreisbahn 15 überein. Vielmehr erstreckt sich die Längsachse 3 des Hauptrohrs 4 in einem Abstand A parallel zu der Spiegelachse 19. Ferner ist eine Längsachse 20 des durch die Nebenrohre 9 und 10 gebildeten Nebenrohrpaars in einem Abstand a₁ parallel zu einer zweiten Spiegelachse 21 der Kreisbahn 114 angeordnet, die sich durch den Kreisbahnmittelpunkt 116 sowie senkrecht zur ersten Spiegelachse 19 erstreckt. Darüber hinaus sind die jeweils kürzesten Abstände a₁, a₂, a₃, a₄ und a₅ der Längsachsen der Nebenrohre 5-14 bzw. der durch diese gebildeten Nebenrohrpaare zum Kreisbahnmittelpunkt 16 voneinander verschieden.

Die Vorteile, der sich durch die exzentrischen Anordnungen des Hauptrohrs 4 sowie der Nebenrohre 5-14 in Bezug auf den Kreisbahnmittelpunkt 16 bzw. die Spiegelachsen 19 und 21 der Kreisbahn 15 ergeben, werden nachfolgend unter Bezugnahme auf die Figuren 2 und 3 erläutert.

Figur 2 zeigt eine Anordnung, bei der vier der in Figur 1 dargestellten erfindungsgemäßen Waschsuspensionsverteilereinrichtungen 1, die zur besseren Unterscheidbarkeit mit den Indizes a, b, c und d versehen sind, in erfindungsgemäßer Art und Weise zueinander ausgerichtet in einem nicht näher dargestellten Waschturm übereinander angeordnet sind. Dabei sind in Figur 2 die Düsenzuteilungsleitungen 18 sowie die daran angeordneten Austrittsdüsen 17 der Übersichtlichkeit halber weggelassen. Die Waschsuspensionsverteilereinrichtung 1a ist gemäß Figur 2 ganz oben angeordnet. Darunter folgen die Waschsuspensionsverteilereinrichtungen 1b, 1c und 1d. Die Waschsuspensionsverteilereinrichtung 1b ist gegenüber der Waschsuspensionsverteilereinrichtung 1a um die erste Spiegelachse 19 um 180° gedreht. Dies hat zur Folge, dass die zugehörigen Hauptrohre 4 in Draufsicht betrachtet versetzt zueinander angeordnet und die Austrittsdüsen 17 der Waschsuspensionsverteilereinrichtung 1b versetzt zu den Austrittsdüsen 17 der Waschsuspensionsverteilereinrichtung 1a positioniert sind. Die Waschsuspensionsverteilereinrichtung 1c ist gegenüber der Waschsuspensionsverteilereinrichtung 1a um die zweite Spiegelachse 21 um 180° gedreht. Entsprechend sind die zugehörigen Hauptrohre 4 in Draufsicht übereinander angeordnet. Dennoch kommt es durch die Drehung zu einem zusätzlichen Versatz der Austrittsdüsen 17 der Waschsuspensionsverteilereinrichtung 1c gegenüber den Austrittsdüsen 17 der Waschsuspensionsverteilereinrichtung 1a. Die Waschsuspensionsverteilereinrichtung 1d ist wiederum gegenüber der Waschsuspensionsverteilereinrichtung 1b um die zweite Spiegelachse 21 um 180° gedreht, so dass die zugehörigen Hauptrohre 4 in Draufsicht übereinander angeordnet sind und ein zusätzlicher Versatz der Austrittsdüsen 17 der Waschsuspensionsverteilereinrichtung 1d gegenüber den Austrittsdüsen 17 der Waschsuspensionsverteilereinrichtung 1b erzielt wird. Es sei darauf hingewiesen, dass sämtliche Austrittsdüsen 17 der Waschsuspensionsverteilereinrichtungen 1a, 1b, 1c und 1d bei ihrer Montage derart ausgerichtet eingebaut werden, dass sie im bestimmungsgemäßen Zustand abwärts weisen. Insgesamt ergibt sich damit eine Austrittsdüsenverteilung gemäß Figur 3.

Der wesentliche Vorteil der erfindungsgemäßen Ausbildung der Waschsuspensionsverteilereinrichtung 1 und der erfindungsgemäßen Anordnung bzw. Ausrichtung mehrerer Waschsuspensionsverteilereinrichtungen 1a, 1b, 1c und 1d innerhalb eines Waschturms besteht darin, dass eine sehr gleichmäßige, im wesentlichen rasterartige Austrittsdüsenverteilung erzielt wird, die homogener als bekannte Austrittsdüsenverteilungen ist, wie sich insbesondere durch einen Vergleich der Figuren 3 und 6 ergibt.

Es sollte klar sein, dass die Anzahl der Nebenrohre variabel ist. Darüber hinaus müssen die Nebenrohre nicht senkrecht zur Längsachse 3 des Hauptrohrs 4 angeordnet sein können. Sie können grundsätzlich auch in einem anderen Winkel quer zur Längsachse 3 vorstehen. Darüber hinaus sind die Positionen der Austrittsdüsen 17 sowie die Abstände A, a₁, a₂, a₃, a₄ und a₅ nach Bedarf frei wählbar.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Waschsuspensionsverteilereinrichtung (1) zur Anordnung innerhalb eines Waschturms, umfassend zumindest ein einen Zulauf (2) definierendes und eine Längsachse (3) aufweisendes Hauptrohr (4) und mehrere mit dem Hauptrohr (4) in Fluidverbindung stehende Nebenrohre (5-14), die in einer gemeinsamen Ebene angeordnet sind und beidseitig von dem Hauptrohr (4) quer zu dessen Längsachse (3) vorstehen, wobei zumindest die Nebenrohre (5-14) jeweils mit einer Vielzahl von Austrittsdüsen (17) versehen sind, und wobei Endbereiche der Nebenrohre (5-14) auf einer gemeinsamen Kreisbahn (15) angeordnet sind, **dadurch gekennzeichnet, dass** das Hauptrohr (4) derart angeordnet ist, dass seine Längsachse (3) nicht mit einer sich durch den Kreisbahnmittelpunkt (16) erstreckenden Spiegelachse (19) der Kreisbahn (15) übereinstimmt.

2. Waschsuspensionsverteilereinrichtung (1) nach Anspruch 1, **dadurch gekennzeichnet, dass** sich die Längsachse (3) des Hauptrohrs (4) in einem Abstand (A) parallel zu einer Spiegelachse (19) der Kreisbahn (15) erstreckt.

3. Waschsuspensionsverteilereinrichtung (1) nach einem der vorhergehenden Ansprüche, **dadurch gekennzeichnet, dass** die Nebenrohre (5-14) jeweils senkrecht vom Hauptrohr (4) abzweigen.

4. Waschsuspensionsverteilereinrichtung (1) nach einem der vorhergehenden Ansprüche, **dadurch gekennzeichnet, dass** die Nebenrohre (5-14) derart paarweise beidseitig von dem Hauptrohr (4) vorstehen, dass die Nebenrohre (5, 6; 7, 8; 9, 10; 11, 12; 13, 14) eines Nebenrohrpaars zumindest teilweise miteinander fluchtend angeordnet sind.

5. Waschsuspensionsverteilereinrichtung (1) nach einem der vorhergehenden Ansprüche, **dadurch gekennzeichnet, dass** die jeweils kürzesten Abstände (a₁, a₂, a₃, a₄, a₅) der Nebenrohre (5-14) oder der Nebenrohrpaare zum Mittelpunkt (16) der Kreisbahn (15) verschieden sind.

6. Waschsuspensionsverteilereinrichtung (1) nach einem der vorhergehenden Ansprüche, **dadurch gekennzeichnet, dass** die Austrittsdüsen (17) zumindest teilweise an quer von den Nebenrohren (5-14) vorstehenden Düsenzuteilungsleitungen (18) angeordnet sind.

7. Waschsuspensionsverteilereinrichtung (1) nach einem der vorhergehenden Ansprüche, **dadurch gekennzeichnet, dass** die Austrittsdüsen (17) zumindest zum Großteil entlang sich parallel und/oder senkrecht zueinander erstreckenden Geraden angeordnet sind.

8. Waschturm mit mehreren baugleich ausgeführten und übereinander angeordneten Waschsuspensionsverteilereinrichtungen (1a, 1b, 1c, 1d) nach einem der vorhergehenden Ansprüche, wobei zumindest eine erste Waschsuspensionsverteilereinrichtung (1a) gegenüber einer zweiten Waschsuspensionsverteilereinrichtung (b) um eine erste Spiegelachse (19) der ihr zugeordneten Kreisbahn (15) um 180° gedreht ist.

9. Waschturm nach Anspruch 8, wobei zumindest eine dritte Waschsuspensionsverteilereinrichtung (1c) gegenüber der ersten Waschsuspensionsverteilereinrichtung (1a) um eine zweite Spiegelachse (21) der ihr zugeordneten Kreisbahn (15) um 180° gedreht ist, wobei sich die zweite Spiegelachse (21) senkrecht zu der genannten ersten Spiegelachse (19) der ersten Waschsuspensionsverteilereinrichtung (1a) erstreckt.
